Europäisches Patentamt

European Patent Office

Office européen des brevets

(19)

(11) Publication number: **0 049 942**
**B1**

(12) **EUROPEAN PATENT SPECIFICATION**

(45) Date of publication of patent specification: **08.02.84**

(51) Int. Cl.³: **H 02 G 3/22, H 01 B 17/30**

(21) Application number: **81303504.5**

(22) Date of filing: **31.07.81**

(54) Grommet assemblies.

(30) Priority: **24.09.80 US 190446**

(43) Date of publication of application:
**21.04.82 Bulletin 82/16**

(45) Publication of the grant of the patent:
**08.02.84 Bulletin 84/6**

(84) Designated Contracting States:
**DE FR GB**

(56) References cited:
**FR - A - 2 179 889**
**FR - A - 2 237 398**
**FR - A - 2 406 903**
**US - A - 2 813 692**
**US - A - 3 880 453**

(73) Proprietor: **GENERAL MOTORS CORPORATION**
**General Motors Building 3044 West Grand Boulevard**
**Detroit Michigan 48202 (US)**

(72) Inventor: **Pearce, Warren (NMN), Jr.**
**4096 Valacamp S.E.**
**Warren Ohio 44484 (US)**
Inventor: **Lightener, John L.**
**2287 Breezewood Drive**
**Austintown Ohio 44515 (US)**
Inventor: **Schramme, Stephen Hunt**
**336 South Colonial**
**Cortland Ohio 44410 (US)**
Inventor: **McGee, Joseph A.**
**8491 Black Oak Drive, N.E.**
**Warren Ohio 44484 (US)**

(74) Representative: **Breakwell, John Neil Bower et al,**
**GM Patent Section Luton Office (F6) P.O. Box No.**
**3 Kimpton Road**
**Luton Beds. LU2 OSY (GB)**

Courier Press, Leamington Spa, England.

Grommet assemblies

This invention relates to grommet assemblies for providing a sealed connection between a bulkhead and a bundle of insulated wires passing through the bulkhead.

The passenger and engine compartments of an automobile are separated by a bulkhead. Several electrical wires must be passed through this bulkhead in order to connect controls and other electrical devices in the passenger compartment to electrical devices in the engine compartment. The wires are preferably passed through in a sealed installation to isolate the passenger compartment from the undesirable environment of the engine compartment.

In the past, several wires were bundled together and passed through a hole in the bulkhead, which was then sealed by a rubber grommet. The rubber grommet was either premoulded and assembled to the bundle, or moulded directly to the bundle before installation to the bulkhead. The sealing effectiveness of these methods diminishes as the number of wires in the bundle increases. Consequently, these methods are not suitable when the bundle has a large number of wires.

Another known method is to use an electrical connector at the bulkhead. Bulkhead connectors, however, increase in size as the number of wires in the bundle increases. Consequently, this method is often not suitable for a large number of wires because of space limitations.

US—A—3,880,453 (Philibert et al) discloses apparatus for sealing an opening in a console through which a group of cables extend into a pressurized environment inside the console. This apparatus includes a three-piece sealing assembly which is placed about the group of cables and pushed into a nipple assembly which is attached to the console. The resulting sealing assembly is locked in place by a locking collar. A split phenolic tube is then placed about the group of cables, taped and closed off at one end by a coated fibre sheet. The split phenolic tube is slid inside the seal assembly, and filled with a polyseal compound. This complicated apparatus is not feasible for typical automotive applications, due among other reasons to the rather tedious and time-consuming installation involved.

In US—A—2,813,692 (Bremer et al) there is disclosed a grommet assembly for providing a sealed connection between a bulkhead and a bundle of insulated electric wires passing through the bulkhead, in which a first shell and a second shell comprise respective grommet segments each provided with an integral outwardly extending flange segment, and at least one of the grommet segments is provided at its respective ends with a pair of inwardly extending flanges defining between them an internal cavity, the first and second shells being adapted to be secured together to form an assembly with the respective flange segments co-operating to provide a mounting flange for co-operation with the bulkhead and the respective grommet segments co-operating to provide an annular chamber surrounding the bundle of insulated electric wires, and in which complementary grooves are formed in the respective flange segments for communication with the annular chamber of the assembly to contribute in providing a seal when a fluid sealant is injected into the annular chamber and around the bundle of insulated electric wires. More specifically, for the purpose of providing a sealed bulkhead installation, several two-piece grommets are assembled around respective cables passing through the bulkhead. The grommets are then secured to the bulkhead and to a cover plate assembly. Each grommet is then filled by injection with a sealant compound. This installation is designed for aircraft or other similar applications which involve electric wires that are combined into a relatively few large multi-wire cables. The installation procedure is not feasible in installations typically used in automobiles, which involve a large bundle of small insulated electric wires, for instance 23 to 32 wires ranging in size from 6 to 30 gauge.

The present invention is concerned with a grommet assembly of this general kind for providing a sealed bulkhead installation which will accommodate a large bundle of small electric wires, of like or mixed gauge sizes, passing through the bulkhead, and which is thereby suitable for automobile applications.

For this purpose a grommet assembly in accordance with the present invention is characterised in that the integral outwardly extending flange segments are provided at one end of each of the grommet segments, and that an element provides a plurality of fingers in the cavity and wire-receiving channels between the fingers, with the fingers effective within the annular chamber of the assembly to spread out the bundle of insulated electric wires so that, when the fluid sealant is injected into the chamber, sealant can penetrate between the insulated wires.

A grommet assembly in accordance with the present invention may be secured to a large bundle of small insulated electric wires, and the resulting assembly may then be simply secured to the bulkhead to provide a sealed installation.

In the accompanying drawings:

Figure 1 is a perspective view of one embodiment of a grommet assembly in accordance with the present invention, in the process of being installed on a bulkhead;

Figure 2 is a section substantially along the line 2—2 of Figure 1, in the direction of the arrows;

Figure 3 is a section substantially along the line 3—3 of Figure 1, in the direction of the arrows;

Figure 4 is a section substantially along the line 4—4 of Figure 1, in the direction of the arrows;

Figure 5 is a section substantially along the line 5—5 of Figure 4, in the direction of the arrows;

Figure 6 is a fragmentary view similar to Figure 4 but showing the grommet assembly after it has been injected with a fluid sealant material; and

Figure 7 is a fragmentary view similar to Figure 5 but showing the grommet assembly after it has been injected with a fluid sealant material.

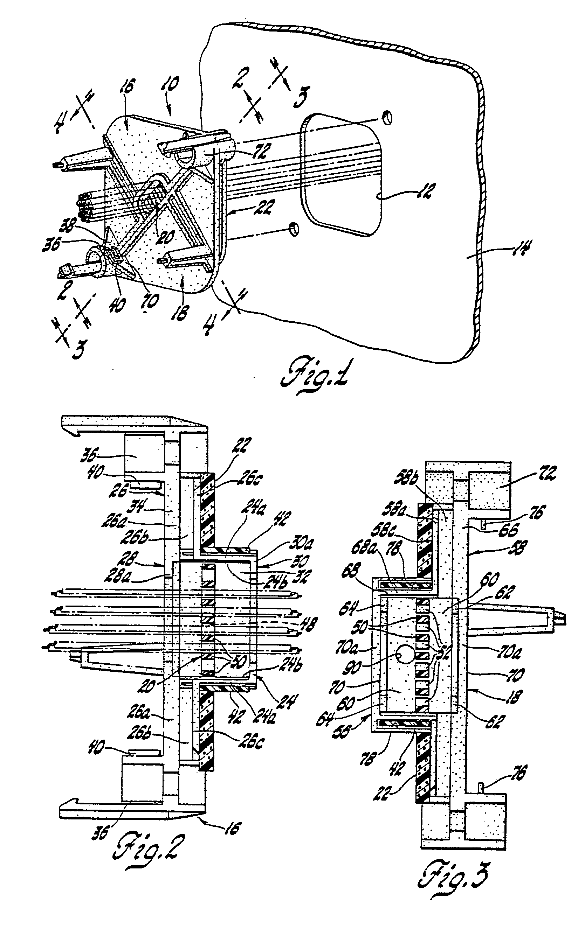

In the drawings, and particularly in Figure 1, there is shown a grommet assembly 10 encircling a bundle of electric wires which are shown in phantom and pass through a hole 12 in a bulkhead 14. The grommet assembly 10, when injected with a fluid sealant and secured to the bulkhead 14, is effective to provide a sealed installation for the electric wires passing through the bulkhead 14.

The grommet assembly 10 comprises shells 16 and 18 which are latched together around the bundle of electric wires, a wire-retainer clip 20 which is inside a chamber formed by the two shells, and a gasket 22 which engages the face of the bulkhead 14.

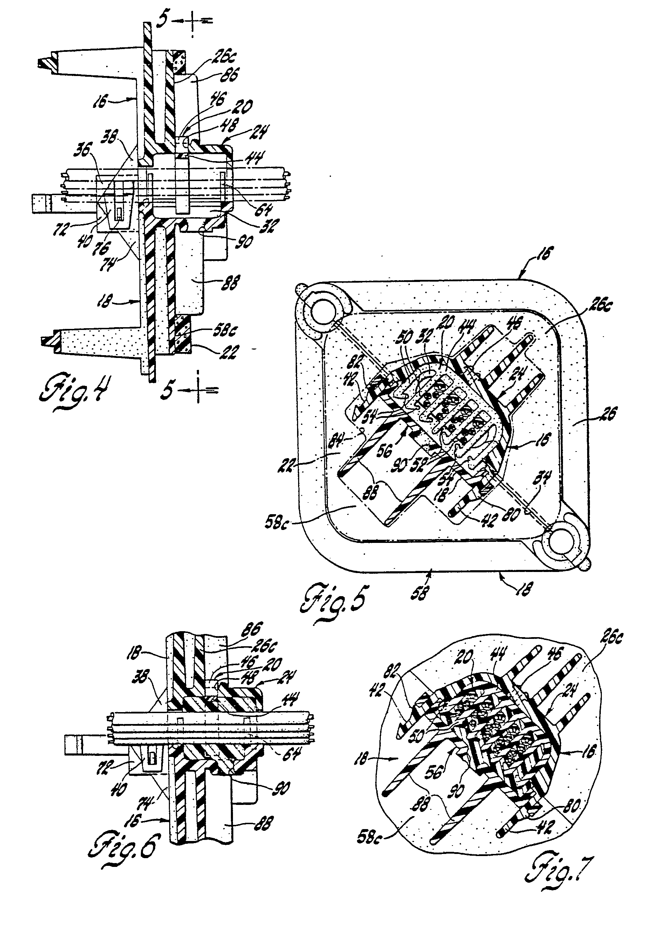

With reference now to Figures 2, 4 and 5, the shell 16 is molded from a hard plastics material such as polyamide (nylon). The shell 16 comprises a deep oblong grommet segment 24 which has an integrally attached flange segment 26 at one end. The flange segment 26 is directed outwardly and is triangular in shape. The grommet segment 24 also has inwardly directed flanges 28 and 30 at its respective ends which provide an internal cavity 32.

The shell 16 has a planar mating face 34 which engages a complementary mating face of the shell 18. This mating face 34 comprises grommet faces 24a at the ends of the grommet segment 24, and flange faces 26a, 28a, and 30a associated with each of the grommet faces 24a. The flange faces 26a of the flange segment 26 each have a radial groove 26b extending from the cavity 32 outwardly towards one of the opposite ends of the flange segment 26. The radial grooves 26b stop short of the respective ends of the flange segment 26 and open on to the end face 26c. The inner ends of the radial grooves 26b communicate with cavity 32 via longitudinal grooves 24b at the inner edges of the grommet faces 24a.

The two opposite ends of the flange segment 26 each have a partial boss 36 which is strengthened by a gusset 38. Each gusset 38 has a latch arm 40 which projects beyond the mating face 34 of the shell 16. The grommet segment 24 also has a latch arm 42 at each end which projects beyond the mating face 34.

The cavity 32 receives the wire-retainer clip 20, which is also molded from a hard plastics material. The clip 20 comprises a base 44 which is shaped to conform to the inner wall of the cavity 32, as is shown in Figure 5. The base 44 has an integral bifurcated head 46 which snaps through a hole 48 through the wall of the grommet segment 24 to retain the clip 20 in the cavity 32. The clip 20 includes several stiffly flexible cantilevered fingers 50 which form a plurality of wire-receiving channels 52: the fingers 50 have hooks 54 at their free ends which provide restricted entrances to the wire-receiving channels 52. All the hooks 54 face inwardly, which eliminates the need for a hook on the middle finger.

With reference now to Figures 3, 4 and 5, the shell 18 is also molded from a hard plastics material. It comprises a shallow oblong grommet segment 56 which has an integrally attached flange segment 58 at one end. The flange segment 58 extends outwardly and is triangular in shape. The grommet segments 24 and 56 form an annulus when the shells 16 and 18 are assembled. The flange segments 26 and 58 form a square mounting flange.

The grommet segment 56 includes a shallow cavity 60 which complements the cavity 32 to form an annular sealant chamber for surrounding the bundle of insulated electric wires. The grommet segment 56 also has a pair of inwardly directed lugs 62 and 64 at its respective ends: these lugs extend into the cavity 32 to ensure proper mating of the shells 16 and 18.

The shell 18 has a planar mating face 66 (Figure 3, which complements the mating face 34 of the shell 16 (Figure 2). This mating face 66 comprises faces 68a of the grommet side walls 68, faces 70a of the grommet end walls 70, and flange faces 58a of the flange segment 58.

The flange faces 58a each have a radial groove 58b which extends from the cavity 60 outwardly towards one of the opposite ends of the flange segment 58. The radial grooves 58b stop short of the opposite ends of the flange segment 58 and open on to the end face 58c.

The opposite ends of the flange segment 58 have partial bosses 72 strengthened by gussets 74. The bosses 72 complement the partial bosses 36 of the shell 16, and have lock nibs 76 which co-operate with the latch arms 40, as shown in Figure 4.

The inside edges of the side walls 68 are grooved, and the grommet segment 56 also has longitudinal slots 78 along the side walls 68 which receive the latch arms 42 when the shells 16 and 18 are assembled together. Each of the latch arms 42 has a pair of nibs 80 and 82, as shown in Figure 5.

The gasket 22 is square-shaped and lies against the end faces 26c and 58c of the flange segments 26 and 58, as shown in phantom in Figure 5. The gasket 22 has an irregular cutout 84 which communicates the grommet segments 24 and 56 and integral stringers 86 and 88 which rigidify the grommet segments 24 and 56 with respect to the respective flange segments 26 and 58.

The grommet assembly 10 is assembled in the following manner. The wire-retainer clip 20 is inserted into the cavity 32 of the shell 16 and retained therein by the bifurcated head 46. The several insulated electric wires of the bundle are then spread apart and inserted into the channels 52, where they are temporarily retained by the hooks 54. The shell 18 is then assembled to the shell 16 in two stages. Firstly, the outer ends of the latch arms 42 are first inserted into the longitudinal slots 78, and the shells 16 and 18 are moved towards each other until the end nibs 80 pass through the slots 78 and the edges of the slots 78 rest on the nibs 82. The nibs 80 retain the shells 16 and 18 in this partially assembled position, and the nibs 82 act as stops to prevent full assembly. In this partially assembled position, the tips of the lugs 62 and 64 project into the cavity 32 to ensure correct alignment of the shells. Secondly, once correct alignment is assured, the parts are completely assembled by snapping the nibs 82 through the slots 78 and the latch arms 40 over the nibs 76.

The annular sealant chamber formed by the cavities 32 and 60 is then filled with a fluid sealant through a fill hole 90 which extends through a wall of the grommet segment 56. This sealant completely fills the chamber and the spaces between the insulated electric wires, as shown in Figures 6 and 7.

The sealant also fills the mating grooves 26*b* and 58*b* to provide a seal at the interface of the shells 16 and 18. Sealant leaving the grooves 26*b* and 58*b* at their respective openings on to the end faces 26*c* and 58*c* ensures that the grooves are filled. When cured, the sealant provides a sealed assembly which is firmly attached to the bundle of insulated electric wires.

By way of example, a nylon-based polyamide hot melt sealant could be utilized, other possibilities being foam silicone or urethane materials.

The gasket 22 is then mounted on the mounting flange comprising the complementary flange segments 26 and 58. A sealed installation is then provided simply by securing the mounting flange to the bulkhead by bolts (for example) in the bosses 36 and 72.

## Claims

1. A grommet assembly for providing a sealed connection between a bulkhead and a bundle of insulated electric wires passing through the bulkhead, in which a first shell (16) and a second shell (18) comprise respective grommet segments (24 and 56) each provided with an integral outwardly extending flange segment (26 and 58), and at least one (24) of the grommet segments is provided at its respective ends with a pair of inwardly extending flanges (28 and 30) defining between them an internal cavity (32), the first and second shells being adapted to be secured together to form an assembly with the respective flange segments co-operating to provide a mounting flange for co-operation with the bulkhead and the respective grommet segments co-operating to provide an annular chamber surrounding the bundle of insulated electric wires, and in which complementary grooves (26*b* and 58*b*) are formed in the respective flange segments for communication with the annular chamber of the assembly to contribute in providing a seal when a fluid sealant is injected into the annular chamber and around the bundle of insulated electric wires, characterised in that the integral outwardly extending flange segments (26 and 58) are provided at one end of each of the grommet segments (24 and 56), and that an element (20) provides a plurality of fingers (50) in the cavity and wire-receiving channels (52) between the fingers, with the fingers effective within the annular chamber of the assembly to spread out the bundle of insulated electric wires so that, when the fluid sealant is injected into the chamber, sealant can penetrate between the insulated wires.

2. A grommet assembly according to claim 1, characterised in that the first and second shells (16 and 18) are secured together, with the annular chamber of the assembly surrounding a bundle of insulated electric wires and the fingers (50) effective within the chamber to spread out the bundle of insulated electric wires, and with injected fluid sealant substantially filling the chambers and penetrating between the insulated wires and also filling the complementary grooves (26*b* and 58*b*) to seal the interface of the shells.

3. A grommet assembly according to claim 1 or 2, characterised in that the element providing the plurality of fingers comprises a wire-retainer clip (20) positioned in the cavity (32) and having a plurality of cantilevered fingers (50) as aforesaid.

4. A grommet assembly according to any one of claims 1 to 3, characterised in that the plurality of fingers (50) are stiffly flexible, with hooks (54) at the free ends of the fingers providing restricted entrances to the wire-receiving channels (52) defined between the fingers.

5. A grommet assembly according to any one of claims 1 to 4, characterised in that the first and second grommet segments (24 and 56) are oblong in form, with the second grommet segment (56) having a shallower oblong configuration than the first grommet segment (24).

6. A grommet assembly according to any one of claims 1 to 5, characterised by a gasket (22) surrounding the grommet segments (24 and 56) of the assembly and engaging a face of the mounting flange formed by the flange segments (26 and 58).

7. A grommet assembly according to claim 6, characterised in that the mounting flange formed by the flange segments (26 and 58) is polygonal in form and is provided with means enabling the assembly to be secured to the bulkhead.

8. A grommet assembly according to any one of claims 1 to 7, characterised in that cooperating latch members (42, 78, 80 and 82) are formed on the first and second grommet segments (24 and 56) for securing together of the first and second shells (16 and 18) to form an assembly as aforesaid.

## Revendications

1. Manchon composite pour réaliser une liaison étanche entre une cloison et un faisceau de fils électriques isolés traversant la cloison, dans lequel une première coquille (16) et une seconde coquille (18) comprennent des segments de manchon respectifs (24 et 56) munis chacun d'un segment de bride venu de matière (26 et 58) s'étendant vers l'extérieur, et au moins un (24) des segments de manchon est muni à ses extrémités respectives de deux rebords (28 et 30) s'étendant vers l'intérieur et délimitant entre eux une cavité intérieure (32), la première et la seconde coquilles étant adaptées pour être fixées l'une à l'autre pour former un manchon, les segments de bride respectifs coopérant pour former une bride de montage avec la cloison et les segments de manchon respectifs coopérant pour former une chambre annulaire entourant le faisceau de fils électriques isolés, et dans lequel des rainures complémentaires (26b et 58b) sont formées dans les segments de bride respectifs pour une communication avec la chambre annulaire du manchon, pour contribuer à réaliser un joint étanche quand une matière d'étanchéité fluide est injectée dans la chambre annulaire et autour du faisceau de fils électriques isolés, caractérisé en ce que les segments de bride venus de matière s'étendant vers l'extérieur (26 et 58) sont prévus à une extrémité de chacun des segments de manchon (24 et 56) et en ce qu'un élément (20) forme une série de doigts (50) dans la cavité et des canaux recevant les fils (52) entre les doigts, les doigts agissant à l'intérieur de la chambre annulaire du manchon pour répartir le faisceau de fils électriques isolés, de façon que, lorsque la matière d'étanchéité fluide est injectée dans la chambre, elle puisse pénétrer entre les fils isolés.

2. Manchon composite suivant la revendication 1, caractérisé en ce que les première et seconde coquilles (16 et 18) sont fixées l'une à l'autre, la chambre annulaire du manchon entourant un faisceau de fils électriques isolés et les doigts (50) agissant à l'intérieur de la chambre pour répartir le faisceau de fils électriques isolés, et la matière d'étanchéité fluide injectée remplissant pratiquement les chambres et pénétrant entre les fils isolés et remplissant aussi les rainures complémentaires (26b et 58b) pour rendre étanche l'interface des coquilles.

3. Manchon composite suivant la revendication 1 ou 2, caractérisé en ce que l'élément formant la série de doigts comprend une attache (20) de retenue des fils positionnée dans la cavité (32) et ayant une série de doigts en porte-à-faux (50), ainsi qu'il a été dit plus haut.

4. Manchon composite suivant l'une quelconque des revendications 1 à 3, caractérisé en ce que la série de doigts (50) sont flexibles avec raideur, avec aux extrémités libres des doigts des crochets (54) forment des entrées rétrécies des canaux (52) recevant les fils et délimités entre les doigts.

5. Manchon composite suivant l'une quelconque des revendications 1 à 4, caractérisé en ce que les premier et second segments de manchon (24 et 56) ont une forme oblongue, le second segment de manchon (56) ayant une configuration oblongue moins profonde que le premier segment de manchon (24).

6. Manchon composite suivant l'une quelconque des revendications 1 à 5, caractérisé par une garniture d'étanchéité (22) entourant les segments de manchon (24 et 56) de l'ensemble et venant en prise avec une face de la bride de montage formée par les segments de bride (26 et 58).

7. Manchon composite suivant la revendication 6, caractérisé en ce que la bride de montage formée par les segments de bride (26 et 58) a une forme polygonale et est munie de moyens permettant au manchon d'être fixé à la cloison.

8. Manchon composite suivant l'une quelconque des revendications 1 à 7, caractérisé en ce que des éléments de verrouillage coopérant mutuellement (42, 78, 80 et 82) sont formés sur les premier et second segments de manchon (24 et 56) pour fixer l'une à l'autre les première et seconde coquilles (16 et 18) afin de former un manchon, tel que décrit précédemment.

## Patentansprüche

1. Zusammengesetzte Buchsen für eine abgedichtete Verbindung zwischen einer Trennwand und einem Bündel isolierter elektrischer Drähte, die die Trennwand durchqueren, mit einer ersten Schale (16) und einer zweiten Schale (18), die jeweilige Durchführungssegmente (24 und 56) umfassen, von denen jedes mit einem einteiligen, sich nach außen erstreckenden Flanschsegment (26 und 58) versehen ist und von denen wenigstens eines (24) an seinen jeweiligen Enden mit einem Paar sich nach innen erstreckenden Flanschen (28 und 30) unter Bildung eines innenliegenden Hohlraumes (32) versehen ist, wobei die ersten und zweiten Schalen zur Verbindung miteinander ausgelegt sind, um eine Baugruppe mit den entsprechenden Flanschsegmenten zu bilden, die so zusammenwirken, daß ein Befestigungsflansch für ein Zusammenwirken mit der Trennwand entsteht und wobei die jeweiligen Durchführungssegmente zur Bildung einer ringförmigen Kammer zusammenwirken, die das Bündel isolierter elektrischer Drähte umschließt, und mit in den jeweiligen Flanschsegmenten ausgebildeten, komplementären Aussparungen (26b und 58b) zur Verbindung mit der ringförmigen Kammer der Baugruppe, um zur Ausbildung einer Dichtung beizutragen, wenn ein Fluid-Dichtungsmittel in die ringförmige Kammer und um das Bündel von isolierten elektrischen Drähten herum eingespritzt wird, dadurch gekennzeichnet, daß die einteiligen, sich nach außen erstreckenden Flanschsegmente (26 und 28) an einem Ende jedes Durchführungssegments (24 und 56) vorgesehen sind und daß ein Element (20) im Hohlraum eine Vielzahl von Fingern (50) und drahtaufnehmende Kanäle (52) zwischen den Fingern aufweist, wobei die Finger innerhalb der ringförmigen Kammer der Baugruppe ein Verteilen des Bündels von isolierten elektrischen Drähten derart bewirken, daß das Abdichtungsmittel zwischen die isolierten Drähte eindringen kann, wenn das Fluid-Abdichtungsmittel in die Kammer eingespritzt wird.

2. Zusammengesetzte Buchsen nach Anspruch 1, dadurch gekennzeichnet, daß die ersten und die zweiten Schalten (16 und 18) miteinander verbunden sind, wobei die ringförmige Kammer der Baugruppe ein Bündel isolierter Drähte umschließt und die Finger (50) ein Verteilen des Bündels von isolierten elektrischen Drähten bewirken und wobei ein eingespritzte Fluid-Abdichtungsmittel die Kammer im wesentlichen füllt und zwischen die isolierten Drähte eindringt und außerdem die komplementären Ausnehmungen (26b und 58b) füllt, um die Zwischenfläche der Schalen abzudichten.

3. Zusammengesetzte Buchsen nach Anspruch 1 oder 2, dadurch gekennzeichnet, daß das die Vielzahl von Fingern aufweisende Element eine drahtaufnehmende, im Hohlraum (32) angeordnete Haltevorrichtung (20) mit einer Vielzahl von freischwebenden Fingern (50) umfaßt.

4. Zusammengesetzte Buchsen nach einem der Ansprüche 1 bis 3, dadurch gekennzeichnet, daß die Vielzahl von Fingern (50) steif flexibel sind, mit Haken (54) an den freien Enden der Finger zur Schaffung begrenzter Eingänge zu den drahtaufnehmenden, zwischen den Fingern ausgebildeten Kanälen (52).

5. Zusammengesetzte Buchsen nach einem der Ansprüche 1 bis 4, dadurch gekennzeichnet, daß die ersten und zweiten Durchführungssegmente (24 und 56) von langgestreckter Form sind, wobei das zweite Durchführungssegment (56) eine weniger ausgeprägt langgestreckte Konfiguration als das erste Durchführungssegment (24) aufweist.

6. Zusammengesetzte Buchsen nach einem der Ansprüche 1 bis 5, gekennzeichnet durch eine Dichtungsmanschette (22), die die Durchführungssegmente (24 und 56) der Baugruppe umgibt und an einer Seite des durch die Flanschsegmente (26 und 58) gebildeten Befestigungsflansches angreift.

7. Zusammengesetzte Buchsen nach Anspruch 6, dadurch gekennzeichnet, daß der durch die Flanschsegmente (26 und 58) gebildete Befestigungsflansch eine vieleckige Form aufweist und mit Einrichtungen versehen ist, die eine Verbindung der Baugruppe mit der Trennwand ermöglicht.

8. Zusammengesetzte Buchsen nach einem der Ansprüche 1 bis 7, dadurch gekennzeichnet, daß zusammenwirkende Rastelemente (42, 78, 80 und 82) auf den ersten und zweiten Durchführungssegmenten (24 und 56) ausgebildet sind, um die ersten und zweiten Schalen (16 und 18) zur Bildung einer Baugruppe zu verbinden.

*Fig.1*

*Fig.2*

*Fig.3*

**0 049 942**

Fig.4

Fig.5

Fig.6

Fig.7